# NEUE EUROPÄISCHE PATENTSCHRIFT

(11) **EP 1 747 843 B2**
(45) Veröffentlichungstag und Bekanntmachung des Hinweises auf die Entscheidung über den Einspruch: **08.02.2012**
(45) Hinweis auf die Patenterteilung: 26.09.2007
(21) Anmeldenummer: 05016638.8
(22) Anmeldetag: 30.07.2005
(51) Int. Cl.: B23Q 1/66, B23Q 1/01, B23Q 11/08, B23Q 7/14

(54) **Bearbeitungsmaschine mit einem Werkstückwechsler**
Machine-tool with a device for changing workpieces
Machine-outil avec dispositif pour changer les pièces a ousiner

(43) Veröffentlichungstag der Anmeldung: 31.01.2007
(73) Patentinhaber: Maschinenfabrik Berthold Hermle Aktiengesellschaft, D-78559 Gosheim (DE)
(72) Erfinder: Bernhard, Franz-Xaver, 78549 Spaichingen (DE); Schwörer, Tobias, 78598 Königsheim (DE)
(74) Vertreter: Hager, Thomas Johannes

(56) Entgegenhaltungen:
- EP-A- 1 186 372
- DE-U1- 9 422 019
- US-A- 4 373 840
- US-A- 4 373 840
- US-A- 4 797 989

## Beschreibung

Die Erfindung betrifft eine Bearbeitungsmaschine mit einem Werkstückwechsler zum Verfahren von zu bearbeitenden Werkstücken und/oder Werkstückpaletten zwischen wenigstens einem Übergabeplatz außerhalb der Bearbeitungsmaschine und einem nicht horizontal verfahrbaren Werkstücktisch der Bearbeitungsmaschine gemäß dem Oberbegriff des Anspruchs 1.

Bei einer derartigen, aus der US 4373840 bekannten Bearbeitungsmaschine erfolgt die Zuführung von Werkstückpaletten von vorne, also von der Seite aus, an der eine Bedienungsperson die Bearbeitungsvorgänge steuert und/oder überwacht. Die Bedienungsperson muss daher während des Werkstückwechselvorgangs ihren Platz verlassen oder sie setzt sich einer Gefährdung aus. Darüber hinaus benötigt dieser bekannte Werkstückwechsler sehr viel Platz und kann daher schon aus diesem Grunde nur für Bearbeitungsmaschinen eingesetzt werden, bei denen ein breiter Zugang zum Werkstücktisch möglich ist.

Aus der EP 1186371 A1 oder der EP 1186372 A1 ist es zwar bereits prinzipiell bekannt, einen Werkstückwechsler an der Rückseite einer Portalfräsmaschine anzubringen, jedoch bedingt diese bekannte Anordnung eine Linearbewegung des Werkstücktisches der Maschine zum Werkstückwechsler hin, um dort beladen beziehungsweise entladen zu werden. Solche linear bewegbaren Werkstücktische sind jedoch bei den meisten Bearbeitungsmaschinentypen nicht vorgesehen. Darüber hinaus hat auch dieser bekannte Werkstückwechsler einen großen Platzbedarf, der ihn aus diesem Grunde für viele Anwendungen nicht verwendbar erscheinen lässt.

Eine Aufgabe der vorliegenden Erfindung besteht somit darin, eine Bearbeitungsmaschine mit nicht horizontal verfahrbarem Werkstücktisch und einem Werkstückwechsler zu schaffen, der gegenüber bekannten Werkstückwechslern einen geringeren Platzbedarf hat und der die vor der Bearbeitungsmaschine stehende Bedienungsperson in keiner Weise beeinträchtigt.

Diese Aufgabe wird erfindungsgemäß durch eine Bearbeitungsmaschine mit den Merkmalen des Anspruchs 1 gelöst.

Die Vorteile der erfindungsgemäßen Bearbeitungsmaschine mit Werkstückwechsler bestehen insbesondere darin, dass dessen schwenkbares Aufnahmeelement für Werkstücke und/oder Werkstückpaletten in den durch zwei Seitenwandungen der nach Art einer Gantry-Maschine ausgebildeten Bearbeitungsmaschine begrenzten Innenraum der Maschine hineinschwenken kann, sodass der außerhalb der Maschine erforderliche zusätzliche Platzbedarf des Werkstückwechslers entsprechend geringer ausfallen kann. Erfindungsgemäß ist dabei dieser Innenraum beziehungsweise Zwischenraum zwischen den Seitenwandungen durch eine öffenbare Querwandung oder Tür in zwei Bereiche unterteilt, nämlich einen vorderen Bearbeitungsbereich und einen hinteren Zuführbereich für den Werkstückwechsler. Bei geöffneter Querwandung oder Tür kann das linear verfahrbare Aufnahmeelement bis zum Werkstücktisch verfahren werden und dort das Werkstück oder die Werkstückpalette ablegen beziehungsweise aufnehmen. Während des Bearbeitungsvorgangs von Werkstücken ist die Querwandung beziehungsweise Tür geschlossen, und der Werkstückwechsler beeinträchtigt in keiner Weise den Bearbeitungsvorgang oder die Bedienungsperson.

Durch die in den Unteransprüchen aufgeführten Maßnahmen sind vorteilhafte Weiterbildungen und Verbesserungen der im Anspruch 1 angegebenen Bearbeitungsmaschine möglich.

Der Werkstückwechsler ist zweckmäßigerweise mit einer Hubeinrichtung für das Aufnahmeelement versehen, um das Abheben und Absetzen von Werkstücken oder Werkstückpaletten rationell durchzuführen.

Erfindungsgemäß ist zur linearen Verfahrbarkeit des Aufnahmeelements dieses auf einer Schienenführung oder einem Teleskopauszug angeordnet, wobei die Schienenführung oder der Teleskopauszug bei einer Schwenkbewegung um die vertikale Achse vorzugsweise mitgeschwenkt wird. Die Mitverschwenkbarkeit ist jedoch ein optionales, wenn auch vorteilhaftes Merkmal.

Der Werkstückwechsler kann als getrennte Anordnung an der Bearbeitungsmaschine positioniert oder als integrale Anordnung an der Maschine anmontiert sein.

Das Aufnahmeelement ist als Doppelgreifer ausgebildet sein. Bei der Ausbildung als Doppelgreifer kann mit einer einzigen Schwenkbewegung gleichzeitig eine bearbeitete Palette vom Werkstücktisch weggeführt und eine unbearbeitete zugeführt werden.

Der Werkstücktisch ist als fest montierter, unbeweglicher Werkstücktisch oder als schwenkbarer Werkstücktisch ausgebildet, dessen Schwenkachse vorzugsweise in oder an den beiden Seitenwandungen gelagert ist. Eine vertikale Verfahrbarkeit des Werkstücktisches ist ohne Beeinträchtigung der erfinderischen Idee ebenfalls möglich.

Der Übergabeplatz kann als vorzugsweise drehbarer Rüsttisch oder als Übergabestation einer Werkstückzuführeinrichtung oder eines externen Werkstück- oder Palettenmagazins ausgebildet sein. Der Übergabeplatz ist dabei vorzugsweise vom Werkstückwechsler entkoppelt, damit Störungen beziehungsweise Schwingungen, die beispielsweise vom Auf- und Abrüsten des Rüstplatzes herrühren, nicht auf den Werkstückwechsler beziehungsweise auf das Maschinengestell übertragen werden.

Die Schlittenanordnung der Werkzeugspindel weist vorzugsweise auch einen vertikalen Bewegungsantrieb auf.

Ausführungsbeispiele der Erfindung sind in der Zeichnung dargestellt und in der nachfolgenden Beschreibung näher erläutert. Es zeigen:
- Figur 1: eine Seitenansicht einer Bearbeitungsmaschine mit integriertem Werkstückwechsler bei zur besseren Darstellung weggeschnittener einer Seitenwandung als erstes Ausführungsbeispiel der Erfindung,
- Figur 2: dieselbe Bearbeitungsmaschine in einer Draufsicht,
- Figur 3: eine Bearbeitungsmaschine mit separatem angesetzten Werkstückwechsler in einer Seitenansicht gemäß Figur 1 als zweites Ausführungsbeispiel der Erfindung,
- Figur 4: die Bearbeitungsmaschine gemäß Figur 3 in der Draufsicht und
- Figur 5: eine Bearbeitungsmaschine mit gegenüber Figur 3 abgewandeltem Werkstückwechsler in der Seitenansicht als drittes Ausführungsbeispiel der Erfindung.

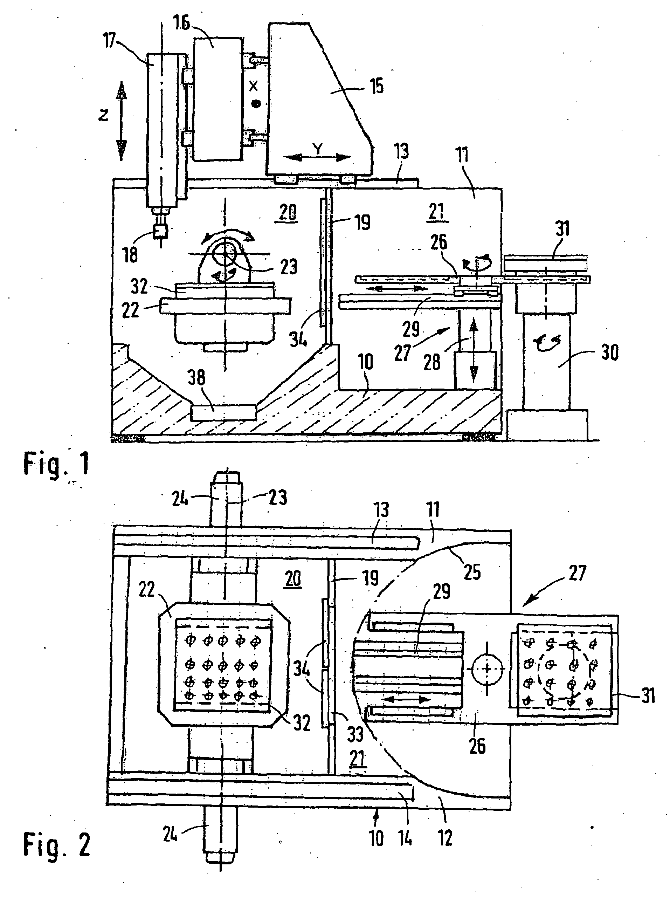

Die in den Figuren 1 und 2 als erstes Ausführungsbeispiel dargestellte Bearbeitungsmaschine ist nach Art einer Gantry-Maschine ausgebildet und dient insbesondere zur Fräs- und/oder Bohrbearbeitung von Werkstücken. Diese Bearbeitungsmaschine besitzt ein Maschinenbett 10, das zwei hochstehende, parallele und voneinander beabstandete Seitenwandungen 11, 12 aufweist. Auf diesen Seitenwandungen sind Führungsschienen 13, 14 angeordnet zur Führung eines motorisch angetriebenen Längsschlittens 15, der sich in der horizontalen Längsrichtung Y bewegen kann. An diesem Längsschlitten 15 ist ein Querschlitten 16 geführt, der sich motorisch in der horizontalen X-Richtung bewegen kann. An diesem Querschlitten 16 wiederum ist eine motorisch angetriebene Werkzeugspindel 17 in der vertikalen Z-Richtung motorisch verschiebbar und dient zum rotatorischen Antrieb von Werkzeugen 18, die dort auswechselbar eingespannt werden können. Ein seitlich angeordneter Werkzeugwechsler ist zur Vereinfachung nicht dargestellt.

Der Bereich zwischen den Seitenwandungen 11, 12 ist durch eine Querwandung 19 in einen vorderen Bearbeitungsbereich 20 und einen hinteren Zuführbereich 21 für Werkstücke unterteilt. Im vorderen Bearbeitungsbereich 20 ist ein als Schwenktisch ausgearbeiteter Werkstücktisch 22 in den beiden Seitenwandungen 11, 12 schwenkbar beziehungsweise drehbar gelagert. Die Schwenkachse 23 verläuft dabei senkrecht zur Längsrichtung der Seitenwandungen 11, 12. Die Schwenkbewegung wird durch zwei an den Außenseiten der Seitenwandungen 11, 12 angeordnete Antriebsmotoren 24 bewirkt, wobei auch ein einziger Antriebsmotor 24 an einer Seite ausreichend sein kann. Der Werkstücktisch 22 kann dabei zusätzlich noch um eine Achse senkrecht zur Schwenkachse 23 geschwenkt werden, wobei der motorische Antrieb direkt am Werkstücktisch 22 oder an den Außenseiten der Seitenwandungen 11, 12 angeordnet sein kann. Eine derartige Anordnung ist beispielsweise aus der DE-A-4441252 bekannt. Dabei kann der Werkstücktisch 22 auch durch andere schwenkbare Werkstückhalteeinrichtungen ersetzt beziehungsweise ausgetauscht werden, und es kann alternativ oder zusätzlich auch ein feststehender Werkstücktisch im Bearbeitungsbereich 20 angeordnet sein.

In den hinteren Zuführbereich 21 greift der Schwenkradius 25. eines um eine vertikale Achse schwenkbaren mit einem Werkstück oder einer Werkstückpalette (31, 32) versehenen Doppelgreifers 26 eines Werkstückwechslers 27 ein. Beim dargestellten Ausführungsbeispiel befindet sich die Werkstückpalette 31 innerhalb des Doppelgreifers 26, so dass der Schwenkradius des Doppelgreifers 26 als größerer Radius maßgeblich ist. Bei überstehender Werkstückpalette 31 ist deren Schwenkradius als größerer Radius maßgeblich. Der Werkstückwechsler 27 besitzt eine Hubeinrichtung 28, auf der eine Linearführungseinrichtung 29 zur horizontalen Linearführung des Doppelgreifers 26 angeordnet ist. Der Werkstückwechsler 27 beziehungsweise die Hubeinrichtung 28 ist dabei auf dem Maschinenbett 10 montiert.

Neben der Maschine als separate Einrichtung ist ein Rüsttisch 30 zur Vorbereitung von Werkstücken oder Werkstückpaletten 31 vor der Bearbeitung durch die Bearbeitungsmaschine und zur Nachbearbeitung nach der Bearbeitung angeordnet. Hierbei werden Werkstückpaletten 31 und/oder Werkstücke beispielsweise positioniert, montiert, gereinigt und dergleichen. In den Figuren befindet sich der Doppelgreifer 26 in einer Verfahrposition, in der einer seiner beiden Greifer unter einer vorbereiteten Werkstückpalette 31 auf dem Rüsttisch 30 positioniert ist. Danach erfolgt eine Hubbewegung, durch die die Werkstückpalette 31 vom Rüsttisch 30 abgehoben wird. Nun verfährt der Doppelgreifer 26 mittels der Linearführungseinrichtung 29 zu einer Werkstückpalette 32, die sich auf dem Werkstücktisch 22 befindet und die bereits bearbeitet ist. Die Querwandung 19 besitzt eine entsprechende Durchgangsöffnung 33, die durch zwei Schwenk- oder Schiebetüren 34 während des Bearbeitungsvorgangs verschlossen ist. Zum Werkstückwechsel öffnen sich die Schwenk- oder Schiebetüren 34, und der Doppelgreifer 26 kann dadurch mit seinem zweiten unbeladenen Greifer unter die Werkstückpalette 32 auf dem Werkstücktisch 22 verfahren. Durch einen Hubvorgang wird diese Werkstückpalette 32 nach entsprechender Entriegelung abgehoben, und der Doppelgreifer 26 verfährt wiederum in die in den Figuren 1 und 2 dargestellte Position. Durch einen Schwenkvorgang um 180°, der selbstverständlich oberhalb des Rüsttisches 30 abläuft, werden die beiden Werkstückpaletten 31, 32 in ihren Positionen ausgetauscht, und die bearbeitete Palette kann zur Nachbearbeitung auf dem Rüsttisch 30 abgelegt werden, während die noch unbearbeitete Palette zum Werkstücktisch 22 verfahren wird und dort durch Absenken die Werkstückpalette 31 ablegt.

In Abwandlung des dargestellten Ausführungsbeispiels kann auch ein kleinerer Schwenkradius 25 vorgesehen sein, sodass der Werkstückwechsler 27 stärker zwischen die Seitenwandungen 11, 12 eingreifen kann.

Nicht erfindungsgemäß kann alternativ zu einem als Greifer ausgebildeten oder einem mit solchen versehenen Aufnahmeelement auch ein mit Koppelelementen zum Ankoppeln von Werkstücken oder Werkstückpaletten (31, 32) versehenes Aufnahmeelement vorgesehen sein, wie es z.B. aus der EP 1321224 A1 bekannt ist. Hierbei ist der Schwenkradius der angekoppelten Werkstücke oder der angekoppelten Werkstückpaletten (31, 32) maßgeblich.

Beim Werkstückwechsler 27 ist es wesentlich, dass der Doppelgreifer 26 eine Schwenkbewegung und eine Linearbewegung durchführen kann. Dies kann beispielsweise auch dadurch erfolgen, dass die Hubeinrichtung 28 einschließlich des Doppelgreifers 26 entlang einer Führungsbahn auf dem Maschinenbett 10 verfahrbar ist.

Der Rüsttisch 30 kann auch um eine vertikale Achse schwenkbar ausgebildet sein, um die Positionierung der Werkstücke beziehungsweise Werkstückpaletten optimal durchführen zu können. Anstelle des Rüsttisches 30 kann auch ein anderer Übergabeplatz außerhalb der Bearbeitungsmaschine vorgesehen sein, beispielsweise der Übergabeplatz einer Werkstück- oder Palettenzuführeinrichtung oder der Übergabeplatz eines externen Palettenmagazins. Ein Rüsttisch 30 kann dann zusätzlich vorgesehen sein.

Sofern anstelle des dargestellten schwenkbaren Werkstücktisches 22 ein entlang einer vertikalen Achse verfahrbarer Werkstücktisch vorgesehen sein sollte, so kann die vertikale Verfahrbarkeit der Werkzeugspindel 17 auch entfallen.

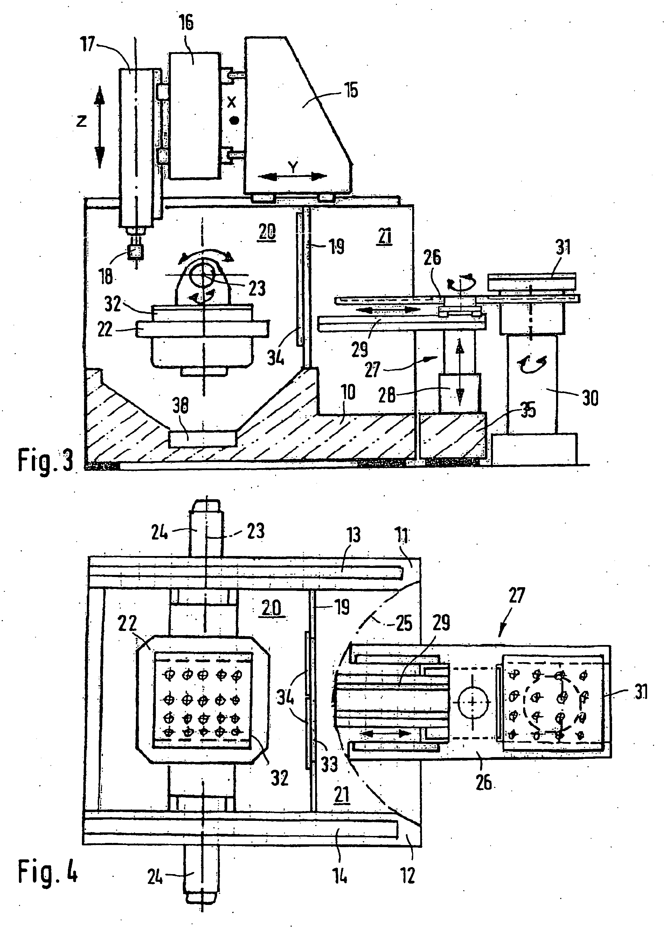

Bei dem in den Figuren 3 und 4 dargestellten zweiten Ausführungsbeispiel sind gleiche oder gleichwirkende Bauteile und Baugruppen mit denselben Bezugszeichen versehen und nicht nochmals detailliert beschrieben. Der Unterschied zum ersten Ausführungsbeispiel besteht darin, dass der Werkstückwechsler 27 nicht mehr auf dem Maschinenbett 10 montiert ist, sondern ein eigenes Grundgestell 35 besitzt und unmittelbar neben der Bearbeitungsmaschine als separate Einrichtung positioniert ist.

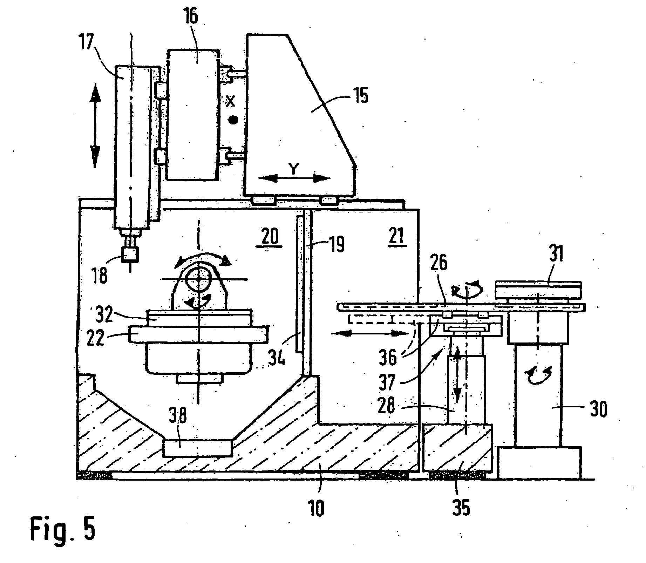

Auch beim in Figur 5 dargestellten dritten Ausführungsbeispiel sind wiederum gleiche oder gleichwirkende Bauteile oder Baugruppen mit denselben Bezugszeichen versehen und nicht nochmals beschrieben. Im Unterschied zu den bisherigen Ausführungsbeispielen ist der Doppelgreifer 26 nicht entlang eines die Linearführungseinrichtung 29 bildenden Führungselements verfahrbar, sondern eine modifizierte Linearführungseinrichtung 36 ist als Teleskopauszug ausgebildet, durch den der Doppelgreifer verfahrbar ist. Dieser Teleskopauszug kann im Gegensatz zur Linearführungseinrichtung 29 gemäß den beiden ersten Ausführungsbeispielen beim Schwenkvorgang des Doppelgreifers 26 auch mitgeschwenkt werden.

Beim dritten Ausführungsbeispiel ist der in der beschriebenen Weise modifizierte Werkstückwechsler 37 gemäß dem zweiten Ausführungsbeispiel als separate Einrichtung ausgebildet. Auch dieser Werkstückwechsler 37 kann jedoch gemäß dem ersten Ausführungsbeispiel am Maschinenbett 10 montiert sein.

Bei allen Ausführungsbeispielen ist das Maschinenbett 10 im Bereich unterhalb des Bearbeitungsbereichs 20 konisch nach unten hin zulaufend ausgebildet, sodass eine Spänerutsche zu einer Späneabführeinrichtung 38 gebildet wird, die beispielsweise als Förderband ausgebildet sein kann. In den Zeichnungen nicht erkennbar können entsprechende Schrägflächen auch von Seitenwandungen zur Späneabführeinrichtung 38 hin verlaufen.

Eine an der Vorderseite vor dem Bearbeitungsbereich 20 stehende bedienende oder beobachtende Bedienungsperson braucht beim Werkstück- oder Palettenwechsel diesen Platz nicht zu verlassen, da der Werkstückwechsler 27 beziehungsweise 37 die Werkstückbeschickung von der Rückseite der Maschine her bewerkstelligt.

## Patentansprüche

1. Bearbeitungsmaschine mit einem Werkstückwechsler (27; 37) zum Verfahren von zu bearbeitenden Werkstücken und/oder Werkstückpaletten (31, 32) zwischen wenigstens einem Übergabeplatz (30) außerhalb der Bearbeitungsmaschine und einem nicht horizontal verfahrbaren Werkstücktisch (22) der Bearbeitungsmaschine, wobei der Werkstückwechsler (27; 37) ein um eine vertikale Achse schwenkbares und in einer senkrecht zu dieser Achse liegenden Ebene linear verfahrbares Aufnahmeelement (26) für Werkstücke und/oder Werkstückpaletten besitzt, und mit einer an einer wenigstens in den beiden horizontalen Richtungen motorisch bewegbaren Schlittenanordnung (15, 16) angeordneten Werkzeugspindel (17), **dadurch gekennzeichnet, dass** die Schlittenanordnung (15, 16) an zwei parallelen Seitenwandungen (11, 12) der nach Art einer Gantry-Maschine ausgebildeten Bearbeitungsmaschine geführt ist, die seitlich einen Bearbeitungsbereich (20) begrenzen, dass der Zwischenraum zwischen den Seitenwandungen (11, 12) durch eine während der Werkstückbearbeitung geschlossenen und während des Werkstückwechselvorgangs wenigstens teilweise geöffneten Querwandung (19) und/oder Tür (34) in einen vorderen Bearbeitungsbereich (20) und einen hinteren Zuführbereich (21) aufgeteilt ist, wobei der Schwenkradius (25) des mit einem Werkstück oder einer Werkstückpalette (31, 32) versehenen Aufnahmeelements (26) wenigstens teilweise in den Zuführbereich (21) eingreift, dass zur linearen Verfahrbarkeit des Aufnahmeelements (26) dieses auf einer Schienenführung (29) oder einem Teleskopauszug (36) angeordnet ist, wobei der Teleskopauszug (36) bei einer Schwenkbewegung des Aufnahmeelements um die vertikale Achse vorzugsweise mitschwenkbar ist, und dass das Aufnahmeelement (26) als Doppelgreifer ausgebildet ist.

2. Bearbeitungsmaschine nach Anspruch 1, **dadurch gekennzeichnet, dass** der Werkstückwechsler (27; 37) mit einer Hubeinrichtung (28) für das Aufnahmeelement (26) versehen ist.

3. Bearbeitungsmaschine nach einem der vorhergehenden Ansprüche, **dadurch gekennzeichnet, dass** der Werkstückwechsler (27; 37) als getrennte Anordnung an der Bearbeitungsmaschine positioniert oder als integrale Anordnung anmontiert ist.

4. Bearbeitungsmaschine nach einem der vorhergehenden Ansprüche, **dadurch gekennzeichnet, dass** der Werkstücktisch (22) als fest montierter, unbeweglicher Werkstücktisch oder als schwenkbarer Werkstücktisch ausgebildet ist, dessen Schwenkachse (23) vorzugsweise in oder an den beiden Seitenwandungen (11, 12) gelagert Ist.

5. Bearbeitungsmaschine nach einem der vorhergehenden Ansprüche, **dadurch gekennzeichnet, dass** der Übergabeplatz (30) als vorzugsweise drehbarer Rüsttisch oder als Übergabestation einer Werkstückzuführeinrichtung oder eines externen Werkstück- oder Palettenmagazins ausgebildet ist.

6. Bearbeitungsmaschine nach einem der vorhergehenden Ansprüche, **dadurch gekennzeichnet, dass** die Schlittenanordnung (15, 16) der Werkzeugspindel (17) auch einen vertikalen Bewegungsantrieb aufweist.

## Claims

1. Machining centre with a workpiece changer (27; 37) for the movement of workpieces to be machined and/or workpiece pallets (31, 32) between one or more transfer stations (30) outside the machining centre and a worktable (22) of the machining centre which does not traverse horizontally, wherein the workpiece changer (27; 37) has a mounting element (26) for workpieces and/or work pallets capable of swivelling around a vertical axis and of traversing in a linear plane lying at right-angles to this axis, and with a tool spindle (17) mounted on a slide assembly (15, 16) motor-driven to move at least in the two horizontal directions, **characterised in that** the slide assembly (15, 16) is guided on two parallel side walls (11, 12) of the machining centre which is in the form of a gantry machine, said side walls defining the sides of a machining zone (20), and that the space between the side walls (11, 12) is divided by a transverse wall (19) and/or door (34), which are closed during work machining and at least partly open during the work changeover process, into a front machining zone (20) and a rear loading zone (21), wherein the swivel radius (25) of the mounting element (26) provided with a workpiece or a work pallet (31, 32) intrudes at least partly into the loading zone (21), that to provide for linear traversing of the mounting element (26), the latter is fitted to a bar guide (29) or a telescopic pullout (36), wherein, during a swivelling movement of the mounting element around the vertical axis, the telescopic pullout (36) is preferably able to accompany this movement, and that the mounting element (26) is in the form of a double gripper.

2. Machining centre according to claim 1, **characterized in that** the workpiece changer (27; 37) is provided with a lifting device (28) for the mounting element (26).

3. Machining centre according to any of the preceding claims, **characterised in that** the workpiece changer (27; 37) is positioned at the machining centre as a separate assembly or is mounted on it as an integral unit.

4. Machining centre according to any of the preceding claims, **characterised in that** the worktable (22) is in the form of a permanently installed immovable worktable or in the form of a swivelling worktable, which swivel axis (23) is preferably supported in or on the two side walls (11, 12).

5. Machining centre according to any of the preceding claims, **characterised in that** the transfer station (30) is in the form of a preferably rotatable tooling table or a transfer station of a workpiece-loading device or an external workpiece or pallet magazine.

6. Machining centre according to any of the preceding claims, **characterised in that** the slide assembly (15, 16) of the tool spindle (17) also has a vertical movement drive.

## Revendications

1. Machine-outil avec un changeur de pièce (27 ; 37) pour déplacer des pièces et/ou palettes de pièces (31 , 32) à usiner entre au moins un poste de remise (30) situé à l'extérieur de la machine-outil et un plateau à pièce (22) de la machine-outil non mobile horizontalement, le changeur de pièce (27 ; 37) possédant un élément de réception (26), pivotant autour d'un axe vertical et mobile de façon linéaire dans un plan perpendiculaire à cet axe, pour les pièces et/ou les palettes de pièces, et avec une broche porte-outil (17) associée à un agencement de chariot (15, 16) mobile de façon motorisée au moins dans les deux directions horizontales, **caractérisée en ce que** l'agencement de chariot (15, 16) est guidé sur deux parois latérales parallèles (15, 16) de la machine-outil conformée à la manière d'une machine portique qui délimitent latéralement une zone d'usinage (20), et **en ce que** l'espace intermédiaire entre les parois latérales (11, 15) est divisé en une zone antérieure d'usinage (20) et une zone postérieure d'introduction (21) par une paroi transversale (19) et/ou porte (34) fermée pendant l'usinage de la pièce et ouverte au moins partiellement pendant l'opération de changement de pièce, le rayon de pivotement de l'élément de réception (26) muni d'une pièce ou d'une palette de pièces (31, 32) s'engageant au moins partiellement dans la zone d'introduction (21), que pour la mobilité linéaire de l'élément de réception (26), celui-ci est placé sur un guidage à rails (29) ou une extension télescopique (36), l'extension télescopique (36) pouvant de préférence pivoter conjointement lors d'un mouvement de pivotement de l'élément de réception autour de l'axe vertical, et que l'élément de réception (26) est conformé en grappin double.

2. Machine-outil selon la revendication 1, **caractérisée en ce que** le changeur de pièce (27 ; 37) est muni d'un dispositif de levage (28) pour l'élément de réception (26).

3. Machine-outil selon l'une des revendications précédentes, **caractérisée en ce que** le changeur de pièce (27 ; 37) est positionné en tant que système séparé sur la machine-outil ou rapporté en tant que système intégral.

4. Machine-outil selon l'une des revendications précédentes, **caractérisée en ce que** le plateau à pièce (22) est conformé en plateau à pièce immobile monté fixement ou en plateau à pièce pivotant, dont l'axe de pivotement (23) est placé de préférence dans ou sur les deux parois latérales (11, 12).

5. Machine-outil selon l'une des revendications précédentes, **caractérisée en ce que** le poste de remise (30) est conformé en plateau de chargement de préférence rotatif ou en poste de remise d'un dispositif d'introduction de pièces ou d'un magasin extérieur de pièces ou de palettes.

6. Machine-outil selon l'une des revendications précédentes, **caractérisée en ce que** l'agencement de chariot (15, 16) de la broche porte-outil (17) présente également un entraînement de déplacement vertical.
